# EUROPÄISCHE PATENTANMELDUNG

(11) **EP 0 807 899 A2**
(43) Veröffentlichungstag der Anmeldung: **19.11.1997**
(21) Anmeldenummer: 97107820.9
(22) Anmeldetag: 13.05.1997
(51) Int. Cl.: G06K 7/10

(54) **Verfahren und Vorrichtung zum Lesen eines auf einem Codeträger vorgesehenen Codes**

(30) Priorität: 14.05.1996 DE 19619479
(71) Anmelder: Sick AG, 79183 Waldkirch, Breisgau (DE)
(72) Erfinder: Fowler, Tim, Church Eaton, Stafford ST200AG (GB)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Es werden ein Verfahren sowie eine Vorrichtung zum Lesen eines auf einem Codeträger (12) vorgesehenen, aus hellen und dunklen Feldern bestehenden Codes (14) beschrieben, bei denen der Code (14) mit einem Laserstrahl (24) abgetastet und das zu einer Lichtempfangsanordnung zurückgeworfende Licht ausgewertet wird. Zumindest ein Teil des von den abgetasteten Codefeldern unterschiedlich reflektierten und nicht mehr zur Lichtempfangsanordnung gelangenden Lichtes wird durch wenigstens eine vorzugsweise diffus streuend reflektierende oder retroreflektierende Fläche (38) in den Abtastbereich zurückgeführt, wobei dieses Licht durch die Codefelder erneut unterschiedlich reflektiert wird und danach der von der Lichtempfangsanordnung erfaßte Kontrast in Abhängigkeit von den Codefeldern deutlich erhöht ist.

## Beschreibung

Die Erfindung betrifft ein Verfahren sowie eine Vorrichtung zum Lesen eines auf einem Codeträger vorgesehenen, aus heilen und dunklen Feldern bestehenden Codes, insbesondere eines Barcodes, bei denen der Code mit einem von einem Lichtsender erzeugten Lichtstrahl wie insbesondere einem Laserstrahl abgetastet und das zu einer Lichtempfangsanordnung zurückgeworfene Licht ausgewertet wird.

Verfahren und Vorrichtungen dieser Art werden auf verschiedenen Gebieten angewendet bzw. eingesetzt. Zu den bekannten Vorrichtungen der genannten Art zählt der sogenannte Barcodeleser, der zum Lesen von aus hellen und dunklen Balken oder Strichen gebildeten Codes verwendet wird. Die dunklen Felder können jedoch beispielsweise auch durch Löcher gebildet sein, sofern sichergestellt ist, daß hinter den Löchern keine reflektierenden Materialien vorhanden sind. Wesentlich ist, daß das einfallende Licht durch die dunklen Felder stärker absorbiert und durch die hellen Felder stärker reflektiert wird, wodurch eine Unterscheidung zwischen den unterschiedlichen Feldern möglich ist.

Bei den bisher üblichen Codelesern kann sich jedoch das Problem ergeben, daß nur ein geringer Teil des auf ein jeweiliges helles Feld auftreffenden Lichtes wieder zur Lichtempfangsanordnung gelangt, wenn die Oberflächenbeschaffenheit des Codeträgers spiegelnd oder stark reflektierend ist. Sind beispielsweise die dunklen Codefelder auf eine blanke, polierte Metalloberfläche aufgebracht und die hellen Codefelder durch diese Metalloberfläche gebildet, so kann es aufgrund der fehlenden Streureflektivität auch bei auf ein helles Codefeld auftreffendem Abtaststrahl dazu kommen, daß nur sehr wenig Licht mehr zur Lichtempfangsanordnung gelangt. Eine Unterscheidung zwischen den lichtabsorbierenden dunklen Feldern einerseits und den hellen Feldern andererseits ist somit nicht mehr möglich. Es sind zwar Verfahren bekannt, bei denen unterschiedliche Druckfarben verwendet und in umgekehrter Weise der Hintergrund invers eingefärbt wird. Hierbei ist jedoch zusätzlicher Aufwand zu betreiben.

Ziel der Erfindung ist es, ein verbessertes Verfahren sowie eine verbesserte Vorrichtung der eingangs genannten Art zu schaffen, mit denen auf eine einfache und kostengünstige Weise stets eine möglichst fehlerfreie Codeerkennung gewährleistet ist.

Die Aufgabe wird beim erfindungsgemäßen verfahren dadurch gelöst, daß zumindest ein Teil des von den abgetasteten Codefeldern unterschiedlich reflektierten und nicht mehr zur Lichtempfangsanordnung gelangenden Lichtes durch wenigstens eine reflektierende Fläche in den Abtastbereich zurückgeführt wird, wobei dieses Licht durch die Codefelder erneut unterschiedlich reflektiert wird und danach der von der Lichtempfangsanordnung erfaßte Kontrast in Abhängigkeit von den Codefeldern deutlich erhöht ist. Die erfindungsgemäße Vorrichtung ist im Anspruch 6 angegeben.

Aufgrund dieser Ausbildung ist eine zuverlässige Codeerkennung selbst dann gewährleistet, wenn die hellen Felder durch eine spiegelende Oberfläche gebildet werden, bei der es sich beispielsweise um eine blanke, polierte und damit eine geringe Streureflektivität aufweisende Metalloberfläche eines Codeträgers handeln kann. Die fehlende Streureflektivität wird erfindungsgemäß dadurch kompensiert, daß von einem jeweiligen hellen Feld reflektiertes, nicht auf die Lichtempfangsanordnung treffende's Licht von der zusätzlich vorgesehenen reflektierenden Fläche zumindest teilweise wieder so auf den Abtastbereich zurückgeworfen wird, daß es durch die dort vorgesehenen hellen Felder wieder zur Lichtempfangsanordnung zurückreflektiert wird. Bei der Abtastung eines jeweiligen hellen Feldes ergibt sich somit eine deutlich erhöhte Lichtausbeute, so daß selbst unter bisher kritischen Bedingungen stets eine einwandfreie Unterscheidung zwischen den hellen Feldern einerseits und den lichtabsorbierenden Feldern rerseits sichergestellt ist. Es ergibt sich insbesondere auch dann ein erhöhter Kontrast zwischen den hellen und den dunklen Codefeldern, wenn die dunklen Felder nicht völlig lichtabsorbierend sind. Dies ist darauf zurückzuführen, daß erfindungsgemäß das von den hellen Feldern stammende Licht insgesamt stets stärker bzw. das von den dunklen Feldern stammende Licht insgesamt stets schwächer reflektiert wird.

andeAls reflektierende Fläche wird vorzugsweise eine diffus streuend reflektierende oder retroreflektierende Fläche verwendet. Damit ist selbst bei einer stark spiegelnden Codeträgeroberfläche bzw. bei stark spiegelnden hellen Feldern gewährleistet, daß noch genügend Licht auf die Lichtempfangsanordnung auftrifft, sobald der Abtaststrahl auf ein jeweiliges helles Feld gerichtet wird.

Die Lichtausbeute kann weiter dadurch erhöht werden, daß die zusätzliche reflektierende Fläche möglichst nahe am Abtastbereich angeordnet wird.

Bei unter einem bestimmten Einfallswinkel auf den Abtastbereich gerichtetem Abtastlichtstrahl wird die reflektierende Fläche vorteilhafterweise so angeordnet, daß bei angenommener Spiegelreflexion im Abtastbereich der unter dem entsprechenden Austrittswinkel vom Abtastbereich reflektierte Lichtstrahl auf die reflektierende Fläche auftrifft. Auch in diesem Fall wird vorzugsweise wiederum eine insbesondere diffus streuend reflektierende oder retroreflektierende Fläche verwendet.

In den Unteransprüchen sind weitere Ausführungsvarianten des erfindungsgemäßen Verfahrens und der erfindungsgemäßen Vorrichtung angegeben.

Die Erfindung wird im folgenden anhand eines Ausführungsbeispiels unter Bezugnahme auf die Zeichnung näher erläutert; in dieser zeigen:
- Figur 1: eine vereinfachte, rein schematische Darstellung einer erfindungsgemäßen Codelesevorrichtung,
- Figur 2: ein Beispiel für einen auf einem Codeträger angeordneten Code und
- Figur 3: ein Blockdiagramm des Sende- und Empfangsteils der Codelesevorrichtung.

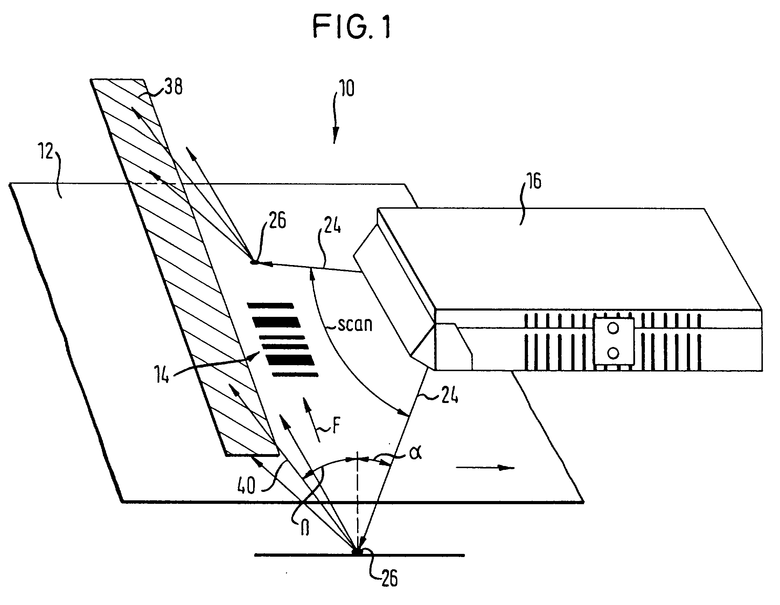

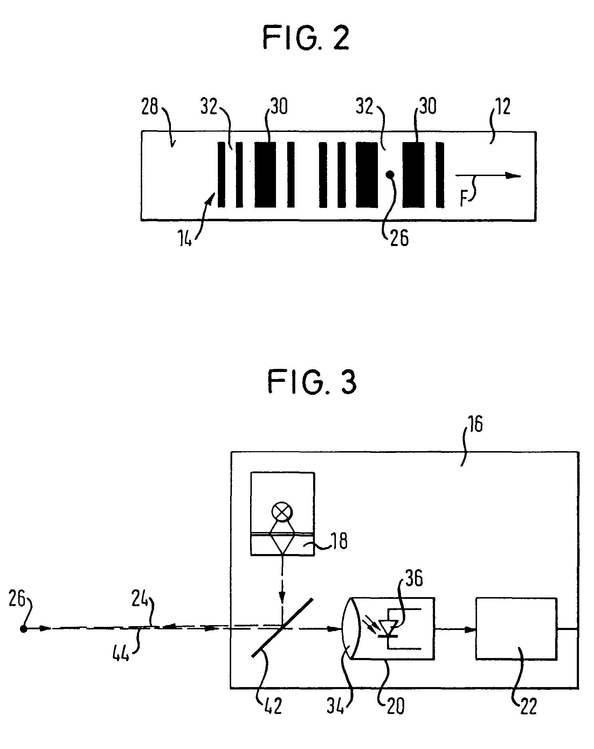

Figur 1 zeigt in vereinfachter schematischer Weise eine Vorrichtung 10 zum Lesen eines auf einem Codeträger 12 vorgesehenen Codes 14 (siehe auch Figur 2).

Die Vorrichtung 10 umfaßt einen Sende-Empfangsteil 16 mit einem Lichtsender 18 und einer Lichtempfangsanordnung 20 sowie einer der Lichtempfangsanordnung 20 nachgeschaltenen Auswertelektronik 22 (siehe Figur 3). In dem Sende-Empfangsteil 16 kann auch eine Ablenkeinheit wie beispielsweise ein Spiegelrad integriert sein, um eine Scanbewegung des betreffenden Lichtstrahles über den Codeträger zu bewirken.

Der Lichtsender 18 der Sende- und Empfangseinheit 16 liefert einen Lichtstrahl, im vorliegenden Fall einen Laserstrahl 24, durch den auf dem Codeträger 12 ein Lichtfleck 26 erzeugt wird, mit dem der Code 14 in Richtung des Pfeiles F abgetastet wird.

Wie anhand von Figur 2 zu erkennen ist, handelt es sich bei dem Code 14 im vorliegenden Fall um einen Bar- oder Strichcode, der auf einer Oberfläche 28 des Codeträgers 12 vorgesehen ist.

Dieser Code 14 umfaßt mehrere auf die betreffende Oberfläche 28 des Codeträgers 12 aufgebrachte, beispielsweise aufgedruckte dunkle, balkenartige Felder 30 sowie helle balkenartige Felder 32, die unmittelbar durch die Oberfläche 28 des Codeträgers 18 gebildet sind.

Der Lichtfleck 26 wird beispielsweise in der mit F bezeichneten Richtung (vgl. Fig. 1 und 2) quer über die balkenartigen Felder 30, 32 des Codes 14 geführt.

Insbesondere die hellen Felder 32 reflektieren Licht zu der Lichtempfangsanordnung 20, wo dieses über eine Linse 34 auf ein Photodiode 36 fokussiert wird.

Gemäß Figur 1 ist wenigstens eine, vorzugsweise diffus streuend reflektierende oder retroreflektierende Fläche 38 vorgesehen, durch die zumindest ein Teil des von den abgetasteten Codefeldern 30, 32 reflektierten, nicht auf die Lichtempfangsanordnung 20 treffenden Lichtes in den den Code 14 aufweisenden Abtastbereich zurückgeworfen wird, um dadurch den von der Lichtempfangsanordnung 20 erfaßten Lichtanteil zu erhöhen.

Diese im vorliegenden Fall streuend reflektierende Fläche 38 ist nahe am Abtastbereich angeordnet, in dem der Abtastfleck 26 auf dem Code 14 abgebildet, d.h. der Code abgetastet wird.

Die streuend reflektierende Fläche 38 kann beispielsweise eine weiße Fläche wie insbesondere eine durch weißes Papier oder dergleichen gebildete Fläche sein. Wie bereits erwähnt, kann auch eine retroreflektierende Fläche verwendet werden. Solche retroreflektierenden Flächen sind z.B. mit Reflexionsfolien leicht herstellbar. Mit einer derartigen retroreflektierenden Fläche wäre eine ähnliche Funktion wie mit weißem Papier erzielbar, und zwar auch bei einer größeren Entfernung der Fläche vom Codeträger. Eine solche retroreflektierende Fläche wäre daher insbesondere in dem Fall zweckmäßig, daß die Tiefenschärfe, d.h. der Bereich des Abstands des Optikkopfes zur Codeebene in der Anwendung variieren kann.

Wie anhand von Figur 1 zu erkennen ist, ist der vom SendeEmpfangsteil 16 ausgehende Abtastlaserstrahl 24 unter einem bestimmten Einfallswinkel α auf den Abtastbereich gerichtet. Die streuend reflektierende Fläche 38 ist dabei so angeordnet, daß bei angenommener Spiegelreflexion im Abtastbereich ein unter einem entsprechenden Austrittswinkel β vom Abtastbereich, insbesondere einem jeweiligen hellen Feld 32 reflektierte Lichtstrahl 40 auf die streuend reflektierende Fläche 38 auftritt.

Durch die streuend reflektierende Fläche 38 wird das auftreffende Licht zumindest teilweise wieder zum Abtastbereich zurückgestreut, wo es insbesondere auch auf wenigstens ein helles Feld 32 auftrifft. Demzufolge gelangt ein entsprechender Lichtanteil ebenfalls durch Spiegelreflexion wiederum zur Lichtempfangsanordnung 20, wodurch der von der Lichtempfangsanordnung 20 erfaßte Lichtanteil insgesamt erhöht wird.

Gemäß Fig. 3 umfaßt der Sende-Empfangsteil 16 einen Strahlenteiler 42 oder eine eng zusammenliegende Pupillenteilung (nicht dargestellt), durch den der vom Lichtsender 18 stammende Laserstrahl 24 zur Erzeugung des den Code abtastenden Lichtflecks 26 zum Codeträger hin umgelenkt wird und der den Empfangsstrahl 44 durchläßt, so daß dieser auf die Lichtempfangsanordnung 20 trifft. Im vorliegenden Fall verlaufen der Sende- und der Empfangsstrahl 24 bzw. 44 im wesentlichen zueinander parallel.

Die Lichtempfangsanordnung 20 empfängt selbst dann noch Licht von den hellen Feldern 32, wenn diese durch eine spiegelnde Fläche ohne Streuvermögen gebildet sein sollten. Die fehlende Streureflektivität wird durch die streuend reflektierende Fläche 38 kompensiert, durch die ansonsten von der Lichtempfangsanordnung 20 nicht erfaßtes Licht in den Abtastbereich zurückgeworfen wird, von wo es zumindest teilweise zur Lichtempfangsanordnung 20 gelangt.

Mit der erfindungsgemäßen Vorrichtung ist somit selbst dann ein fehlerfreies Lesen des Codes gewährleistet, wenn dieser auf einer blanken, polierten Metallfläche vorgesehen sein sollte, d.h. die hellen Felder durch eine solche Spiegelfläche gebildet sind.

### Bezugszeichenliste

- 10: Vorrichtung
- 12: Codeträger
- 14: Code
- 16: Sende-Empfangsteil
- 18: Lichtsender
- 20: Lichtempfangsanordnung
- 22: Auswertelektronik
- 24: Laserstrahl
- 26: Lichtfleck
- 28: Oberfläche
- 30: dunkle Felder
- 32: helle Felder
- 34: Linse
- 36: Photodiode
- 38: reflektierende Fläche
- 40: reflektierter Lichtstrahl
- 42: Strahlteilerspiegel
- 44: Empfangsstrahl

## Patentansprüche

1. Verfahren zum Lesen eines auf einem Codeträger (12) vorgesehenen, aus hellen und dunklen Feldern (32, 30) bestehenden Codes (14), insbesondere eines Barcodes, bei dem der Code (14) mit einem von einem Lichtsender (18) erzeugten Lichtstrahl (24) wie insbesondere einem Laserstrahl abgetastet und das zu einer Lichtempfangsanordnung (20) zurückgeworfende Licht ausgewertet wird,
dadurch **gekennzeichnet,**
daß zumindest ein Teil des von den abgetasteten Codefeldern (32, 30) unterschiedlich reflektierten und nicht mehr zur Lichtempfangsanordnung (20) gelangenden Lichtes durch wenigstens eine reflektierende Fläche (38) in den Abtastbereich zurückgeführt wird, wobei dieses Licht durch die Codefelder (32, 30) erneut unterschiedlich reflektiert wird und danach der von der Lichtempfangsanordnung (20) erfaßte Kontrast in Abhängigkeit von den Codefeldern (32, 30) deutlich erhöht ist.

2. Verfahren nach Anspruch 1,
dadurch **gekennzeichnet,**
daß als reflektierende Fläche (38) eine streuend reflektierende Fläche verwendet wird.

3. Verfahren nach Anspruch 1 oder 2,
dadurch **gekennzeichnet,**
daß die reflektierende Fläche (38) nahe am Abtastbereich angeordnet wird.

4. Verfahren nach einem der vorhergehenden Ansprüche,
dadurch **gekennzeichnet,**
daß als reflektierende Fläche (38) eine weiße Fläche wie insbesondere eine durch weißes Papier oder dergleichen gebildete Fläche verwendet wird.

5. Verfahren nach einem der vorhergehenden Ansprüche,
dadurch **gekennzeichne,**
daß als reflektierende Fläche (38) eine aus retroreflektierendem Material bestehende Fläche verwendet wird.

6. Verfahren nach einem der vorhergehenden Ansprüche,
dadurch **gekennzeichnet,**
daß bei unter einem bestimmten Einfallswinkel (α) auf den Abtastbereich gerichtetem Abtastlichtstrahl (24) die reflektierende Fläche (38) so angeordnet wird, daß bei angenommener Spiegelreflexion im Abtastbereich der unter dem entsprechenden Austrittswinkel (β) vom Abtastbereich reflektierte Lichtstrahl (40) auf die reflektierende Fläche (38) auftrifft.

7. Vorrichtung zum Lesen eines auf einem Codeträger (12) vorgesehenen, aus hellen und dunklen Feldern (32, 30) bestehenden Codes (14), insbesondere eines Barcodes, mit einem Lichtsender zu Erzeugung eines den Code (14) abtastenden Lichtstrahls (24) wie insbesondere eines Laserstahls und einer Lichtempfangsanordnung (20) für den Empfang des zurückgeworfendes Lichtes, insbesondere zur Ausführung des Verfahrens nach einem der vorhergehenden Ansprüche,
**gekennzeichnet**
durch wenigstens eine reflektierende Fläche (38), durch die zumindest ein Teil des von den abgetasteten Codefeldern (32, 30) unterschiedlich reflektierten und nicht mehr zur Lichtempfangsanordnung (20) gelangenden Lichtes in den Abtastbereich zurückgeworfen wird, wobei dieses Licht durch die Codefelder (32, 30) erneut unterschiedlich reflektiert wird und danach der von der Lichtempfangsanordnung (20) erfaßte Kontrast in Abhängigkeit von den Codefeldern (32, 30) deutlich erhöht ist.

8. Vorrichtung nach Anspruch 7,
dadurch **gekennzeichnet,**
daß die reflektierende Fläche (38) eine streuend reflekierende Fläche ist.

9. Vorrichtung nach Anspruch 7 oder 8,
dadurch **gekennzeichnet,**
daß die reflektierende Fläche (38) nahe am Abtastbereich angeordnet ist.

10. Vorrichtung nach einem der vorhergehenden Ansprüche,
dadurch **gekennzeichnet,**
daß die reflektierende Fläche (38) eine weiße Fläche wie insbesondere eine durch weißes Papier oder dergleichen gebildete Fläche ist.

11. Vorrichtung nach einem der vorhergehenden Ansprüche,
dadurch **gekennzeichnet,**
daß die reflektierende Fläche (38) eine aus retroreflektierendem Material bestehende Fläche ist.

12. Vorrichtung nach nach einem der vorhergehenden Ansprüche,
dadurch **gekennzeichnet,**
daß der Abtastlichtstrahl (24) unter einem bestimmten Einfallswinkel (α) auf den Abtastbereich gerichtet und die reflektierende Fläche (38) so angeordnet ist, daß bei angenommener Spiegelreflexion im Abtastbereich der unter dem entsprechenden Austrittswinkel (β) vom Abtastbereich reflektierte Lichtstrahl (40) auf die reflektierende Fläche (38) auftrifft.
